# FASCICULE DE BREVET EUROPEEN

(11) **EP 1 637 057 B1**
(45) Date de publication et mention de la délivrance du brevet: **18.04.2007**
(21) Numéro de dépôt: 05356129.6
(22) Date de dépôt: 02.08.2005
(51) Int. Cl.: A47J 43/07

(54) **Appareil électroménager de préparation culinaire à commande simplifiée**
Elektrisches Haushaltsgerät zur Nahrungszubereitung mit vereinfachter Bedienbarkeit
Electrical household food processor with simplified control

(30) Priorité: 30.08.2004 FR 0409188
(43) Date de publication de la demande: 22.03.2006
(73) Titulaire: SEB S.A., 69130 Ecully (FR)
(72) Inventeur: Basora, Antonio, 08028 Barcelona (ES)
(74) Mandataire: Kiehl, Hubert

(56) Documents cités:
- DE-A1- 19 604 759

## Description

La présente invention concerne le domaine technique des appareils électroménagers de préparation culinaire comportant un couvercle coiffant une base entraînant un outil rotatif, comme connus du document DE 19604759.

Les appareils électroménagers de préparation culinaire du type précité comprennent notamment les centrifugeuses et les moulinettes. Les centrifugeuses comportent un panier filtrant tournant dans un bol. Les moulinettes comportent un outil coupant tournant dans un bol.

Il est connu du document FR 2 730 398 un appareil de préparation des aliments comprenant un boîtier comportant un élément de commande mobile prévu pour actionner un interrupteur associé au moteur. L'élément de commande entraîne deux organes de retenue prévus pour coopérer avec des ouvertures du couvercle. Des organes de verrouillage agencés dans le boîtier détectent la présence du couvercle pour autoriser l'actionnement de l'élément de commande. Toutefois le dispositif de commande proposé est composé de nombreuses pièces. L'élément de commande entraîne des parties mobiles selon une direction radiale. Les organes de verrouillage sont montés sur le boîtier. La construction proposée est relativement onéreuse.

Un but de la présente invention est de simplifier la construction d'un appareil électroménager du type précité, tout en conservant une utilisation simple et sûre.

Un autre but de la présente invention est de faciliter la détection de la présence du couvercle sur le boîtier en plusieurs points.

Un autre but de la présente invention est de faciliter le verrouillage du couvercle sur le boîtier en plusieurs points.

Ces buts sont atteints avec un appareil électroménager de préparation culinaire, comprenant un boîtier logeant un moteur, un outil rotatif agencé sur le boîtier, un couvercle coiffant l'outil rotatif, le couvercle comportant au moins un organe d'accrochage et au moins un organe d'actionnement, le boîtier comportant un élément de commande mobile prévu pour actionner un interrupteur associé au moteur, l'élément de commande entraînant au moins un organe de retenue prévu pour coopérer avec ledit organe d'accrochage, au moins un organe de verrouillage prévu pour coopérer avec ledit organe d'actionnement étant agencé dans le boîtier, ledit organe de verrouillage étant déformable de manière réversible et/ou mobile contre un moyen de rappel, du fait que ledit organe de verrouillage appartient à l'élément de commande, ledit organe d'actionnement écartant ledit organe de verrouillage d'une butée appartenant au boîtier lorsque le couvercle est en place sur le boîtier, le déplacement de l'élément de commande vers une position de fonctionnement de l'appareil mettant en prise ledit organe de retenue avec ledit organe d'accrochage avant que l'organe de commande actionne l'interrupteur. Ces dispositions permettent de simplifier le montage de l'appareil tout en conservant un dispositif de sécurité performant. La construction de l'appareil est beaucoup plus économique.

Avantageusement, le couvercle comporte au moins deux organes d'actionnement et l'élément de commande comporte au moins deux organes de verrouillage. Cette disposition permet une meilleure sécurité, en rendant le déverrouillage de l'élément de commande plus sûr.

Avantageusement encore le couvercle comporte au moins deux organes d'accrochage et l'élément de commande comporte au moins deux organes de retenue. Cette disposition permet une meilleure sécurité, en rendant le verrouillage du couvercle plus sûr.

Selon un mode de réalisation avantageux, ledit organe de verrouillage est formé par une languette flexible. Avantageusement alors la languette flexible est issue de l'élément de commande. Cette disposition facilite la réalisation d'une pluralité d'organes de verrouillage. En alternative ledit organe de verrouillage peut être formé par une pièce mobile montée contre un élément de rappel, ou par une pièce élastique rapportée.

Selon un mode de réalisation avantageux, ledit organe de retenue est issu de l'élément de commande. Cette disposition facilite la réalisation d'une pluralité d'organes de retenue. En alternative ledit organe de retenue peut appartenir à une pièce entraînée par l'élément de commande.

Selon un mode de réalisation avantageux, le boîtier comporte une platine assemblée avec un corps, et l'élément de commande est monté entre la platine et le corps. La construction de l'appareil est ainsi simplifiée.

Selon un mode de réalisation avantageux, le couvercle comporte au moins une protubérance inférieure prévue pour être engagée dans une ouverture ménagée sur le boîtier. Avantageusement alors, l'ouverture est ménagée entre la platine et le corps. En alternative, la partie inférieure du couvercle peut être engagée dans une rainure annulaire ménagée sur le boîtier.

Avantageusement encore ledit organe d'accrochage appartient à ladite protubérance inférieure. En alternative, ledit organe d'accrochage peut appartenir à la partie inférieure du couvercle.

Avantageusement encore ledit organe d'actionnement appartient à ladite protubérance inférieure. En alternative, ledit organe d'actionnement peut appartenir à la partie inférieure du couvercle.

Avantageusement encore ledit organe d'accrochage et ledit organe d'actionnement appartiennent à ladite protubérance inférieure.

Avantageusement encore ledit organe d'accrochage comporte une encoche latérale. Cette disposition permet de réduire la largeur de l'ouverture ménagée dans le boîtier.

Avantageusement encore l'élément de commande forme une couronne. L'élément de commande peut ainsi être monté entre la platine et le corps.

Avantageusement encore l'élément de commande est mobile en rotation. De préférence l'élément de commande est mobile dans un plan perpendiculaire à l'axe de rotation de l'outil rotatif.

Avantageusement encore l'outil rotatif est agencé dans un récipient de travail.

L'invention sera mieux comprise à l'étude d'un exemple de réalisation, pris à titre nullement limitatif, illustré dans les figures annexées, dans lesquelles :
- la figure 1 est une vue en perspective éclatée d'une centrifugeuse formant un appareil électroménager de préparation culinaire selon l'invention.
- la figure 2 est une vue en perspective éclatée illustrant les éléments appartenant au dispositif de commande et de sécurité,
- la figure 3 est une vue partielle en perspective avec un éclaté montrant le couvercle disposé le boîtier de l'appareil,
- la figure 4 est une vue en perspective de la face inférieure de la platine et de l'élément de commande en position de repos, en l'absence du couvercle,
- la figure 5 est une vue partielle en perspective de la face inférieure de la platine et de l'élément de commande, montrant le blocage en rotation de l'élément de commande par la platine en l'absence du couvercle,
- la figure 6 est une vue de dessous montrant l'engagement du couvercle avec l'élément de commande,
- la figure 7 est une vue partielle en perspective de la face inférieure de la platine, du couvercle et de l'élément de commande en position de repos,
- la figure 8 est une vue partielle en perspective de la face inférieure de la platine, du couvercle et de l'élément de commande en position intermédiaire,
- la figure 9 est une vue partielle en perspective de la face inférieure de la platine, du couvercle et de l'élément de commande en position de fonctionnement.

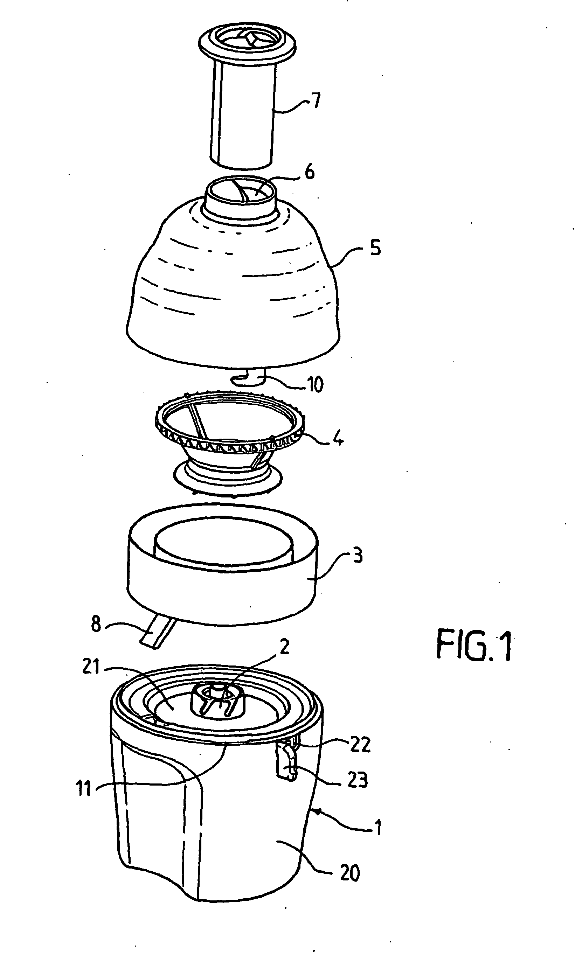

La figure 1 montre une centrifugeuse formant un appareil électroménager de préparation culinaire selon l'invention. Cet appareil comprend un boîtier 1 logeant un moteur, un récipient 3, un outil rotatif 4 formé par un panier filtrant, et un couvercle 5. Le couvercle 5 présente une goulotte 6 dans laquelle peut être engagé un poussoir 7. Le récipient 3 présente une sortie 8 prévue pour l'écoulement du jus obtenu lors de la préparation. Un axe entraîneur 2 relié au moteur (non représenté aux figures) est monté sur le boîtier 1. L'axe entraîneur 2 est prévu pour entraîner en rotation l'outil rotatif 4. Le récipient 3 et l'outil rotatif 4 sont agencés de manière amovible sur le boîtier 1.

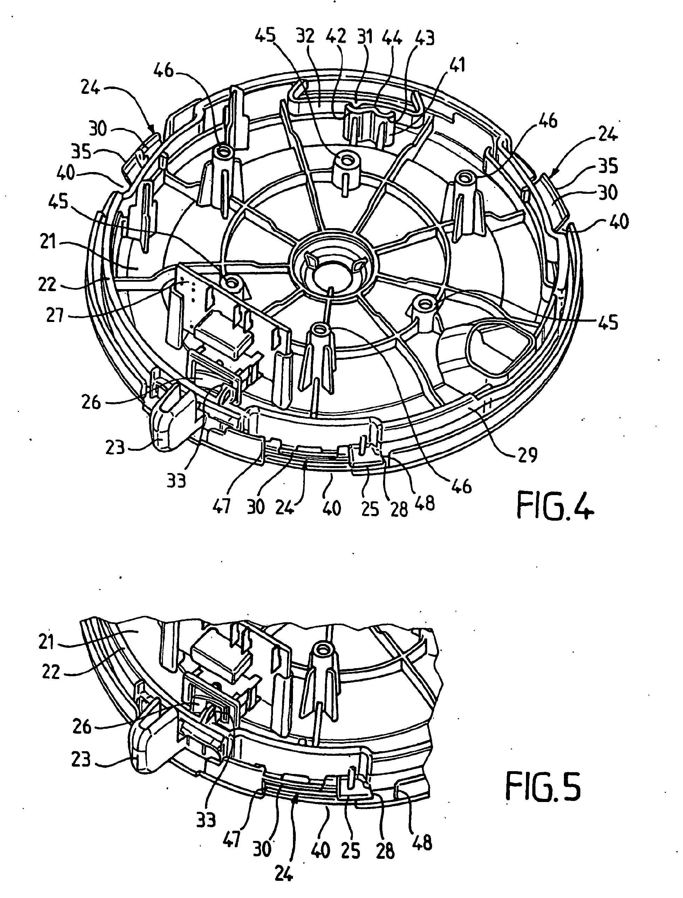

Le boîtier 1 comporte un corps 20 formant une coque présentant une ouverture supérieure. Une platine 21 est montée dans l'ouverture supérieure. La platine 21 est assemblée avec le corps 20, par exemple au moyen de vis. A cet effet la face inférieure de la platine 21 comporte des plots 45 prévus pour la fixation du moteur et des plots 46 prévus pour la fixation du corps, visibles sur la figure 4.

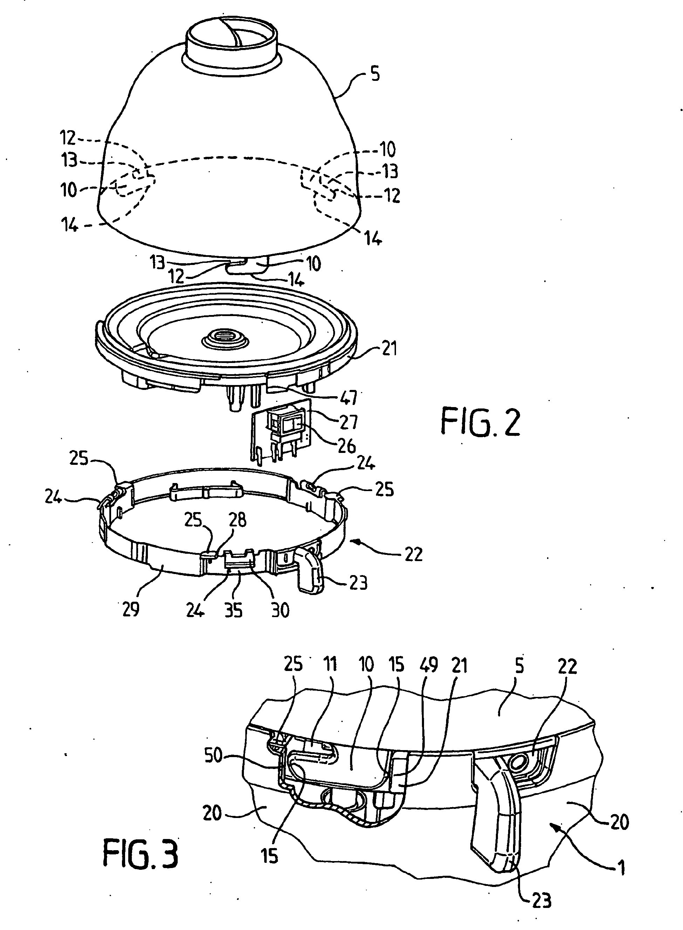

L'appareil selon l'invention comporte un dispositif de commande et de sécurité, détaillé sur la figure 2, prévu pour verrouiller le couvercle 5 sur le boîtier 1 et pour autoriser le fonctionnement de l'appareil lorsque le couvercle 5 est verrouillé sur le boîtier 1. A cet effet le couvercle 5 comporte au moins un organe d'accrochage 12 et au moins un organe d'actionnement 14, le boîtier 1 comportant un élément de commande 22 mobile prévu pour actionner un interrupteur 26 associé au moteur. L'élément de commande 22 entraîne au moins un organe de retenue 25 prévu pour coopérer avec ledit organe d'accrochage 12. Au moins un organe de verrouillage 24 est agencé dans le boîtier. Ledit organe de verrouillage 24 est déformable de manière réversible et/ou mobile contre un moyen de rappel. Ledit organe de verrouillage 24 est prévu pour coopérer avec ledit organe d'actionnement 14.

Plus particulièrement selon l'invention, ledit organe de verrouillage 24 appartient à l'élément de commande 22, ledit organe d'actionnement 14 écarte ledit organe de verrouillage 24 d'une butée 47 appartenant au boîtier 1 lorsque le couvercle 5 est en place sur le boîtier 1, et le déplacement de l'élément de commande 22 vers une position de fonctionnement de l'appareil met en prise ledit organe de retenue 25 avec ledit organe d'accrochage 12 avant d'actionner l'interrupteur 26.

L'élément de commande 22 est logé dans le boîtier 1. Plus particulièrement, l'élément de commande 22 comporte une manette 23 agencée à l'extérieur du boîtier 1. L'élément de commande 22 est monté entre la platine 21 et le corps 20. L'élément de commande 22 est monté mobile en rotation par rapport au corps 20 et à la platine 21.

Avantageusement, tel qu'illustré à la figure 2, le couvercle 5 comporte trois protubérances inférieures 10. Les protubérances inférieures 10 sont issues du bord inférieur du couvercle 5. Les protubérances inférieures 10 sont prévues pour être engagées dans trois ouvertures 11 ménagées sur le boîtier 1. Le couvercle 5 comporte trois organes d'accrochage 12. Plus particulièrement, les organes d'accrochage 12 appartiennent aux protubérances inférieures 10, chacun des organes d'accrochage 12 comportant une encoche latérale 13. Le couvercle 5 comporte trois organes d'actionnement 14. Plus particulièrement, les organes d'actionnement 14 sont formés par la partie inférieure et la face interne des protubérances inférieures 10.

Avantageusement, tel qu'illustré à la figure 2, l'élément de commande 22 forme une couronne 29. L'élément de commande 22 est de préférence réalisé dans une matière pouvant être moulée et qui présente un faible coefficient de frottement et une bonne résistance mécanique, tel que par exemple l'acétal.

L'élément de commande 22 comporte trois organes de verrouillage 24, prévus pour coopérer avec les organes d'actionnement 14 issus du couvercle 5. Les organes de verrouillage 24 sont formés par des languettes flexibles 30. Les languettes flexibles 30 comportent avantageusement une extrémité libre 35 inclinée par rapport à la direction d'introduction des protubérances inférieures 10 dans les ouvertures 11 du boîtier. Les languettes flexibles 30 sont issues de la couronne 29.

Trois organes de retenue 25 sont issus de l'élément de commande 22. Les organes de retenue 25 sont prévus pour coopérer avec les organes d'accrochage 12 issus du couvercle 5.

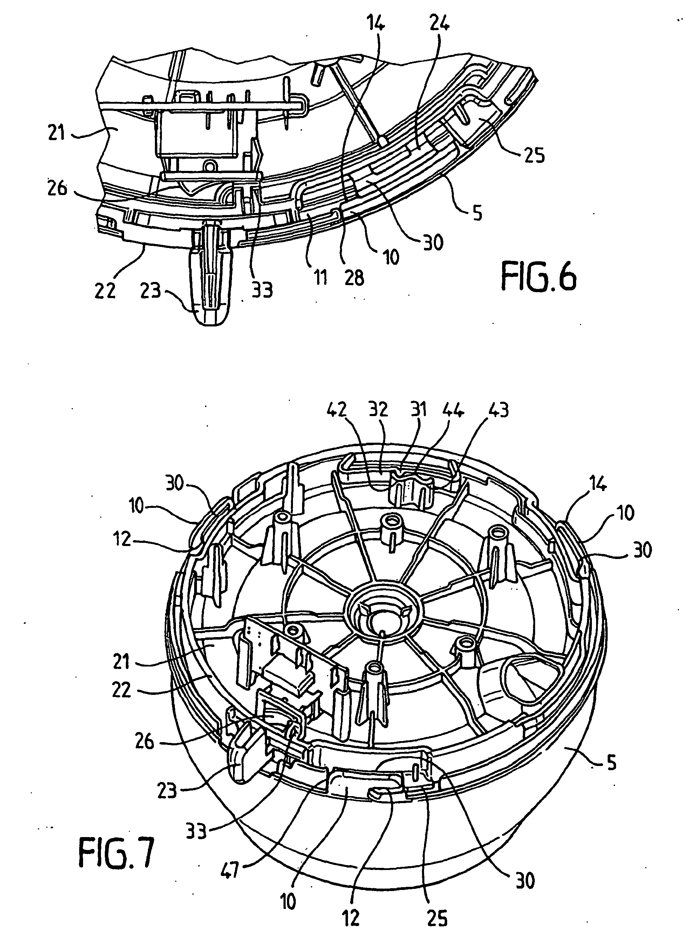

L'élément de commande 22 est prévu pour coopérer avec l'interrupteur 26 monté dans le boîtier 1. L'interrupteur 26 est par exemple fixé sur un support 27 monté sous la platine 21. La course de l'élément de commande 22 est limitée d'une part par les organes de verrouillage 24 et d'autre part par des butées latérales 28. Les organes de verrouillage 24 et les butées latérales 28 coopèrent avec des butées 47, 48 du boîtier, mieux visibles aux figures 4 et 5. Plus particulièrement, les butées latérales 28 sont ménagées sur les organes de retenue 25.

Le couvercle 5 comporte des moyens d'arrêt en rotation 15 prévus pour coopérer avec des butées d'arrêt appartenant au boîtier 1. Plus particulièrement, tel que montré à la figure 3, les moyens d'arrêt en rotation 15 appartiennent aux protubérances latérales 10. Les moyens d'arrêt en rotation 15 sont formés par les extrémités latérales des protubérances latérales 10. Les moyens d'arrêt en rotation 15 sont susceptible de coopérer avec des butées d'arrêt 49, 50 appartenant au boîtier 1 lorsque les protubérances latérales 10 sont engagées dans les ouvertures 11. Les butées d'arrêt 49 sont issues de la platine 21. Les butées d'arrêt 50 sont issues du corps 20.

La figure 4 illustre l'élément de commande 22 associé à la platine 21. Les butées 47, 48 sont ménagées sur la platine 21. Plus particulièrement, les languettes flexibles 30 sont agencées en regard d'échancrures 40 ménagées dans la périphérie de la platine 21. Les échancrures 40 forment les ouvertures 11 du boîtier visibles sur la figure 1. Les butées 47, 48 sont formées par les parois latérales des échancrures 40.

L'élément de commande 22 comporte un ergot 31 ménagé sur une partie flexible 32. L'ergot 31 est prévu pour coopérer avec une paroi 41 de la platine 21. La paroi 41 comporte deux renfoncements 42, 43 reliés par un bossage 44. L'élément de commande 22 représenté à la figure 4 occupe une position de repos dans laquelle l'ergot 31 est logé dans le renfoncement 42. L'élément de commande 22 comporte un organe de commande 33 prévu pour coopérer avec l'interrupteur 26. Tel que représenté à la figure 4, l'interrupteur 26 occupe une position dans laquelle le moteur de l'appareil n'est pas alimenté.

La figure 5 illustre l'arrêt en rotation de l'élément de commande 22 en l'absence du couvercle 5. Les organes de verrouillage 24 sont bloqués latéralement par les butées 28. L'organe de commande 33 s'est déplacé par rapport à l'interrupteur 26. Toutefois l'interrupteur 26 occupe toujours une position dans laquelle le moteur de l'appareil n'est pas alimenté.

L'appareil selon l'invention s'utilise et fonctionne de la manière suivante.

Lorsque l'utilisateur met en place le couvercle 5 sur le boîtier 1, les protubérances inférieures 10 s'engagent dans les ouvertures 11 du boîtier 1, tel que représenté à la figure 6. Les organes d'actionnement 14 repoussent les organes de verrouillage 24 hors des butées 28.

Tel que monté à la figure 7, chacun des organes d'accrochage 12 est placé en regard d'un organe de retenue 25 issu de l'élément de commande 22. L'élément de commande 22 occupe une position de repos, dans laquelle le couvercle 5 peut être mis en place ou retiré du boîtier. L'ergot 31 est en place dans le renfoncement 42. Cette position de repos est une position stable.

Le couvercle 5 est bloqué en rotation par les moyens d'arrêt en rotation 15 coopérant avec les butées 49, 50 du boîtier 1, tel qu'illustré à la figure 3.

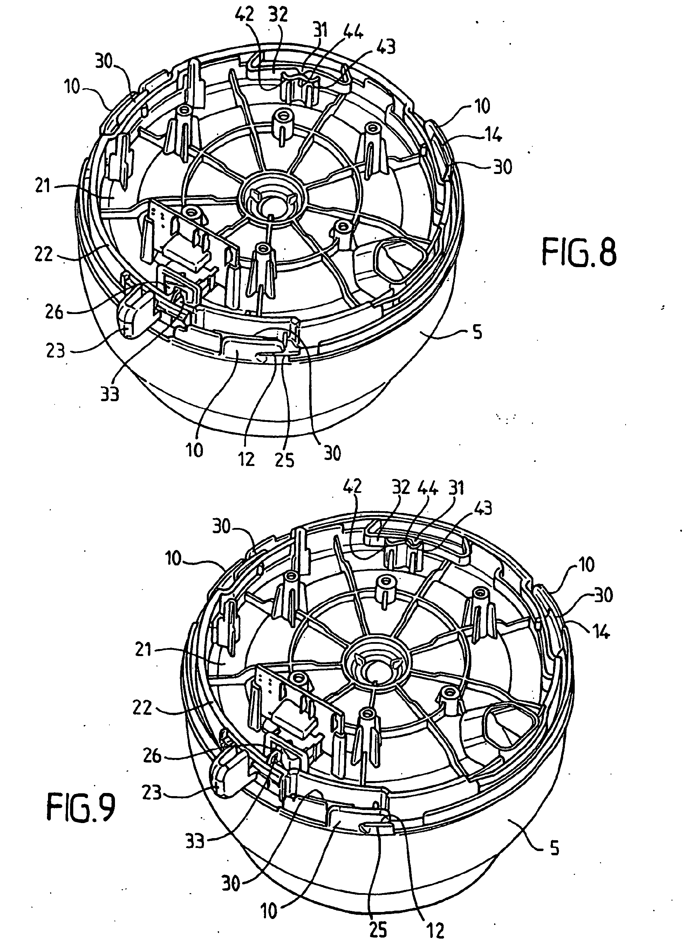

Lorsque l'utilisateur déplace la manette 23 et entraîne l'élément de commande 22, les organes de verrouillage 24 repoussés par les organes d'actionnement 14 glissent contre lesdits organes d'actionnement 14. L'élément de commande 22 vient en prise avec les organes d'accrochage 12. Plus particulièrement, tel que montré à la figure 8, la rotation de l'élément de commande 22 engage les organes de retenue 25 dans les encoches latérales des organes d'accrochage 12. Ainsi le couvercle 5 est verrouillé par rapport au boîtier. L'élément de commande 22 occupe une position de verrouillage. L'ergot 31 est disposé au niveau du bossage 44. Cette position de verrouillage est une position instable. L'organe de commande 33 s'est déplacé par rapport à l'interrupteur 26. Toutefois l'interrupteur 26 occupe toujours une position dans laquelle le moteur de l'appareil n'est pas alimenté.

Lorsque l'utilisateur poursuit le déplacement de la manette 23, l'élément de commande 22 est toujours en prise avec les organes d'accrochage 12. Les organes de verrouillage 24 restent repoussés par les organes d'actionnement 14 et glissent encore contre lesdits organes d'actionnement 14. Plus particulièrement, tel que montré à la figure 9, la rotation de l'élément de commande 22 engage encore davantage les organes de retenue 25 dans les encoches latérales des organes d'accrochage 12. Le couvercle 5 est toujours verrouillé par rapport au boîtier. L'organe de commande 33 s'est déplacé par rapport à l'interrupteur 26. L'interrupteur 26 occupe maintenant une position dans laquelle le moteur de l'appareil est alimenté. L'organe de commande 22 occupe une position de fonctionnement, dans laquelle le couvercle est toujours verrouillé sur le boîtier. L'ergot 31 est en place dans le renfoncement 43. Cette position de fonctionnement est une position stable.

Ainsi la mise en marche de l'appareil demande seulement deux opérations : d'abord mettre en place le couvercle 5 sur le boîtier 1 ; puis déplacer la manette 23 pour entraîner l'élément de commande 22. Le couvercle 5 est d'abord verrouillé par rapport au boîtier 1 (figure 8), puis l'appareil est mis en marche (figure 9) alors que le couvercle 5 reste verrouillé sur le boîtier 1.

Inversement, l'accès à l'outil rotatif 4 demande également deux opérations : d'abord déplacer la manette 23, pour arrêter l'appareil (figure 8) puis libérer le couvercle 5 (figure 7) ; ensuite retirer le couvercle 5.

L'appareil proposé est ainsi d'un fonctionnement à la fois très simple et très sûr. L'élément de commande 22 est mobile dans une seule direction, avantageusement dans un plan perpendiculaire à l'axe de rotation de l'outil rotatif 4. De plus la construction de l'appareil est particulièrement économique, le dispositif de commande et de sécurité utilisant un nombre très réduit de pièces.

A titre de variante, d'autres types de récipient 3 et/ou d'outil rotatif 4 peuvent être utilisés. Par exemple, un outil rotatif comportant une ou plusieurs lames coupantes peut être envisagé.

A titre de variante l'élément de commande 22 n'est pas nécessairement mobile en rotation.

A titre de variante l'élément de commande 22 peut notamment être supporté par le corps 20 ou par la platine 21.

A titre de variante, les organes d'accrochage 12 et les organes d'actionnement 14 ne sont pas nécessairement agencés sur les mêmes protubérances inférieures du couvercle 5. Les organes d'accrochage 12 et les organes d'actionnement 14 ne sont pas nécessairement agencés sur des protubérances inférieures du couvercle 5. Les organes d'actionnement et/ou les organes d'accrochage peuvent être agencés sur la partie inférieure de la paroi latérale du couvercle, à l'intérieur et/ou à l'extérieur.

A titre de variante, les languettes flexibles 30 formant les organes de verrouillage 24 peuvent être assistées par une ou plusieurs pièces formant ressort, par exemple par des fils métalliques élastiques. Les organes de verrouillage peuvent également être formés par une ou plusieurs pièces rapportées sur l'élément de commande 22.

A titre de variante, les organes de retenue 25 ne sont pas nécessairement issus de l'élément de commande 22. Les organes de retenue peuvent être entraînés par l'élément de commande 22. Les organes de retenue sont alors montés mobiles dans le boîtier.

A titre de variante, l'appareil ne comporte pas nécessairement trois organes de retenue 25 coopérant avec trois organes d'accrochage 12. L'appareil comporte au moins un organe de retenue coopérant avec un organe d'accrochage.

A titre de variante, l'appareil ne comporte pas nécessairement trois organes de verrouillage 24 coopérant avec trois organes d'actionnement 14. L'appareil comporte au moins un organe de verrouillage coopérant avec un organe d'actionnement.

A titre de variante, le couvercle 5 ne comporte pas nécessairement trois protubérances inférieures 10 s'engageant dans trois ouvertures 11 du boîtier.

A titre de variante, les moyens d'arrêt en rotation 15 du couvercle 5 n'appartiennent pas nécessairement au protubérances latérales 10.

La présente invention n'est nullement limitée à l'exemple de réalisation décrit et à ses variantes, mais englobe de nombreuses modifications dans le cadre des revendications.

## Revendications

1. Appareil électroménager de préparation culinaire, comprenant un boîtier (1) logeant un moteur, un outil rotatif (4) agencé sur le boîtier (1), un couvercle (5) coiffant l'outil rotatif (4), le couvercle (5) comportant au moins un organe d'accrochage (12) et au moins un organe d'actionnement (14), le boîtier (1) comportant un élément de commande (22) mobile prévu pour actionner un interrupteur (26) associé au moteur, l'élément de commande (22) entraînant au moins un organe de retenue (25) prévu pour coopérer avec ledit organe d'accrochage (12), au moins un organe de verrouillage (24) prévu pour coopérer avec ledit organe d'actionnement (14) étant agencé dans le boîtier (1), ledit organe de verrouillage (24) étant déformable de manière réversible et/ou mobile contre un moyen de rappel, **caractérisé en ce que** ledit organe de verrouillage (24) appartient à l'élément de commande (22), **en ce que** ledit organe d'actionnement (14) écarte ledit organe de verrouillage (24) d'une butée (47) appartenant au, boîtier (1) lorsque le couvercle (5) est en place sur le boîtier (1), et **en ce que** le déplacement de l'élément de commande (22) vers une position de fonctionnement de l'appareil met en prise ledit organe de retenue (25) avec ledit organe d'accrochage (12) avant d'actionner l'interrupteur (26).

2. Appareil électroménager de préparation culinaire selon la revendication 1, **caractérisé en ce que** ledit organe de verrouillage (24) est formé par une languette flexible (30).

3. Appareil électroménager de préparation culinaire selon la revendication 2, **caractérisé en ce que** la languette flexible (30) est issue de l'élément de commande (22).

4. Appareil électroménager de préparation culinaire selon l'une des revendications 1 à 3, **caractérisé en ce que** ledit organe de retenue (25) est issu de l'élément de commande (22).

5. Appareil électroménager de préparation culinaire selon l'une des revendications 1 à 4, **caractérisé en ce que** le boîtier (1) comporte une platine (21) assemblée avec un corps (20), et **en ce que** l'élément de commande (22) est monté entre la platine (21) et le corps (20).

6. Appareil électroménager de préparation culinaire selon l'une des revendications 1 à 4, **caractérisé en ce que** le couvercle (5) comporte au moins une protubérance inférieure (10) prévue pour être engagée dans une ouverture (11) ménagée sur le boîtier (1).

7. Appareil électroménager de préparation culinaire selon la revendication 6, **caractérisé en ce que** le boîtier (1) comporte une platine (21) assemblée avec un corps (20), **en ce que** l'élément de commande (22) est monté entre la platine (21) et le corps (20), et **en ce que** l'ouverture (11) est ménagée entre la platine (21) et le corps (20).

8. Appareil électroménager de préparation culinaire selon l'une des revendications 6 ou 7, **caractérisé en ce que** ledit organe d'accrochage (12) appartient à ladite protubérance inférieure (10).

9. Appareil électroménager de préparation culinaire selon l'une des revendications 6 à 8, **caractérisé en ce que** ledit organe d'actionnement (14) appartient à ladite protubérance inférieure (10).

10. Appareil électroménager de préparation culinaire selon l'une des revendications 6 ou 7, **caractérisé en ce que** ledit organe d'accrochage (12) et ledit organe d'actionnement (14) appartiennent à ladite protubérance inférieure (10).

11. Appareil électroménager de préparation culinaire selon l'une des revendications 1 à 10, **caractérisé en ce que** ledit organe d'accrochage (12) comporte une encoche latérale (13).

12. Appareil électroménager de préparation culinaire selon l'une des revendications 1 à 11, **caractérisé en ce que** l'élément de commande (22) forme une couronne (29).

13. Appareil électroménager de préparation culinaire selon l'une des revendications 1 à 12, **caractérisé en ce que** l'élément de commande (22) est mobile en rotation.

14. Appareil électroménager de préparation culinaire selon l'une des revendications 1 à 13, **caractérisé en ce que** l'outil rotatif (4) est agencé dans un récipient de travail (3).

## Claims

1. A food-preparing household electrical appliance comprising a housing (1) containing a motor, a rotary tool (4) arranged on the housing (1), and a lid (5) overlying the rotary tool (4), the lid (5) being provided with at least one catch member (12) and with at least one actuator member (14), the housing (1) being provided with at least one moving control element (22) designed to actuate a switch (26) associated with the motor, the control element (22) driving at least one retaining member (25) designed to co-operate with said catch member (12), at least one locking member (24) designed to co-operate with said actuator member (14) being arranged in the housing (1), said locking member (24) being deformable reversibly and/or mounted to move in opposition to return means, said food-preparing household electrical appliance being **characterized in that** said locking member (24) belongs to the control element (22), **in that** said actuator member (14) moves said locking member (24) away from an abutment (47) belonging to the housing (1) when the lid (5) is in place on the housing (1), and **in that** the control element (22), by moving towards an operating position in which the appliance can operate, puts said retaining member (25) in engagement with said catch member (12) before it actuates the switch (26).

2. A food-preparing household electrical appliance according to claim 1, **characterized in that** said locking member (24) is formed by a flexible tongue (30).

3. A food-preparing household electrical appliance according to claim 2, **characterized in that** said flexible tongue (30) is formed integrally with the control element (22).

4. A food-preparing household electrical appliance according to any one of claims 1 to 3, **characterized in that** said retaining member (25) is formed integrally with the control element (22).

5. A food-preparing household electrical appliance according to any one of claims 1 to 4, **characterized in that** the housing (1) comprises a deck (21) assembled to a body (20), and **in that** the control element (22) is mounted between the deck (21) and the body (20).

6. A food-preparing household electrical appliance according to any one of claims 1 to 4, **characterized in that** the lid (5) is provided with at least one bottom protuberance (10) designed to be engaged in an opening (11) provided in the housing (1).

7. A food-preparing household electrical appliance according to claim 6, **characterized in that** the housing (1) comprises a deck (21) assembled to a body (20), **in that** the control element (22) is mounted between the deck (21) and the body (20), and **in that** the opening (11) is provided between the deck (21) and the body (20).

8. A food-preparing household electrical appliance according to claim 6 or claim 7, **characterized in that** said catch member (12) belongs to said bottom protuberance (10).

9. A food-preparing household electrical appliance according to any one of claims 6 to 8, **characterized in that** said actuator member (14) belongs to said bottom protuberance (10).

10. A food-preparing household electrical appliance according to claim 6 or claim 7, **characterized in that** said catch member (12) and said actuator member (14) belong to said bottom protuberance (10).

11. A food-preparing household electrical appliance according to any one of claims 1 to 10, **characterized in that** said catch member (12) is provided with a side notch (13).

12. A food-preparing household electrical appliance according to any one of claims 1 to 11, **characterized in that** the control element (22) forms a ring (29).

13. A food-preparing household electrical appliance according to any one of claims 1 to 12, **characterized in that** the control element (22) is mounted to move in rotation.

14. A food-preparing household electrical appliance according to any one of claims 1 to 13, **characterized in that** the rotary tool (4) is arranged in a working receptacle (3).

## Patentansprüche

1. Elektrisches Haushaltsgerät zur Nahrungszubereitung, mit einem Gehäuse (1), in dem ein Motor aufgenommen ist, einem drehbaren Werkzeug (4), das auf dem Gehäuse angeordnet ist, einem das drehbare Werkzeug (4) umgreifenden Deckel (5), wobei der Deckel (5) mindestens ein Einhakmittel (12) und mindestens ein Betätigungsmittel (14) aufweist, wobei das Gehäuse (1) ein bewegliches Steuerelement (22) aufweist, das zum Betätigen eines dem Motor zugeordneten Schalters (26) vorgesehen ist, wobei das Steuerelement (22) mindestens ein Haltemittel (25) antreibt, das zum Zusammenwirken mit dem Einhakmittel (12) vorgesehen ist, wobei mindestens ein zum Zusammenwirken mit dem Betätigungsmittel (14) vorgesehenes Verriegelungsorgan (24) im Gehäuse (1) angeordnet ist, wobei das Verriegelungsmittel (24) umkehrbar verformbar und/oder gegen ein Rückstellmittel bewegbar ist, **dadurch gekennzeichnet, dass** das Verriegelungsmittel (24) zum Steuerelement (22) gehört, dass das Betätigungsmittel (14) das Verriegelungsmittel (24) von einem zum Gehäuse gehörenden Anschlag (47) wegrückt, wenn der Deckel (5) auf dem Gehäuse (1) aufgesetzt ist, und dass das Verschieben des Steuerelements (22) zu einer Betriebsstellung des Geräts das Haltemittel (25) mit dem Einhakmittel (12) in Eingriff bringt, bevor der Schalter (26) betätigt wird.

2. Elektrisches Haushaltsgerät zur Nahrungszubereitung nach Anspruch 1, **dadurch gekennzeichnet, dass** das Verriegelungsmittel (24) durch eine biegsame Zunge (30) gebildet ist.

3. Elektrisches Haushaltsgerät zur Nahrungszubereitung nach Anspruch 2, **dadurch gekennzeichnet, dass** die biegsame Zunge (30) aus dem Steuerelement (22) hervorgeht.

4. Elektrisches Haushaltsgerät zur Nahrungszubereitung nach einem der Ansprüche 1 bis 3, **dadurch gekennzeichnet, dass** das Haltemittel (25) aus dem Steuerelement (22) hervorgeht.

5. Elektrisches Haushaltsgerät zur Nahrungszubereitung nach einem der Ansprüche 1 bis 4, **dadurch gekennzeichnet, dass** das Gehäuse (1) eine mit einem Körper (20) zusammengefügte Platte (21) aufweist, und dass das Steuerelement (22) zwischen der Platte (21) und dem Körper (20) angebracht ist.

6. Elektrisches Haushaltsgerät zur Nahrungszubereitung nach einem der Ansprüche 1 bis 4, **dadurch gekennzeichnet, dass** der Deckel (5) mindestens einen unteren Vorsprung (10) aufweist, der zum Eingreifen in eine im Gehäuse (1) eingebrachte Öffnung (11) vorgesehen ist.

7. Elektrisches Haushaltsgerät zur Nahrungszubereitung nach Anspruch 6, **dadurch gekennzeichnet, dass** das Gehäuse (1) eine mit einem Körper (20) zusammengefügte Platte (21) aufweist, dass das Steuerelement (22) zwischen der Platte (21) und dem Körper (20) angebracht ist, und dass die Öffnung (11) zwischen der Platte (21) und dem Körper (20) eingebracht ist.

8. Elektrisches Haushaltsgerät zur Nahrungszubereitung nach einem der Ansprüche 6 oder 7, **dadurch gekennzeichnet, dass** das Einhakmittel (12) zum unteren Vorsprung (10) gehört.

9. Elektrisches Haushaltsgerät zur Nahrungszubereitung nach einem der Ansprüche 6 bis 8, **dadurch gekennzeichnet, dass** das Betätigungsmittel (14) zum unteren Vorsprung (10) gehört.

10. Elektrisches Haushaltsgerät zur Nahrungszubereitung nach einem der Ansprüche 6 oder 7, **dadurch gekennzeichnet, dass** das Einhakmittel (12) und das Betätigungsmittel (14) zum unteren Vorsprung (10) gehören.

11. Elektrisches Haushaltsgerät zur Nahrungszubereitung nach einem der Ansprüche 1 bis 10, **dadurch gekennzeichnet, dass** das Einhakmittel (12) eine seitliche Einkerbung (13) aufweist.

12. Elektrisches Haushaltsgerät zur Nahrungszubereitung nach einem der Ansprüche 1 bis 11, **dadurch gekennzeichnet, dass** das Steuerelement (22) einen Kranz (29) bildet.

13. Elektrisches Haushaltsgerät zur Nahrungszubereitung nach einem der Ansprüche 1 bis 12, **dadurch gekennzeichnet, dass** das Steuerelement (22) drehbeweglich ist.

14. Elektrisches Haushaltsgerät zur Nahrungszubereitung nach einem der Ansprüche 1 bis 13, **dadurch gekennzeichnet, dass** das drehbare Werkzeug (4) in einem Arbeitsbehälter (3) angeordnet ist.
